(19) Europäisches Patentamt
European Patent Office
Office européen des brevets

(11) EP 4 163 009 A1

(12) **EUROPEAN PATENT APPLICATION**
published in accordance with Art. 153(4) EPC

(43) Date of publication:
**12.04.2023 Bulletin 2023/15**

(21) Application number: **20939410.5**

(22) Date of filing: **03.06.2020**

(51) International Patent Classification (IPC):
***B01J 20/24*** *(2006.01)* ***B01J 20/30*** *(2006.01)*
***C02F 1/28*** *(2006.01)* ***C08B 3/14*** *(2006.01)*

(52) Cooperative Patent Classification (CPC):
**B01J 20/24; B01J 20/30; C02F 1/28; C08B 3/14**

(86) International application number:
**PCT/JP2020/021903**

(87) International publication number:
**WO 2021/245832 (09.12.2021 Gazette 2021/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **National University Corporation Kanazawa University**
  **Ishikawa 920-1192 (JP)**
- **Daicel Corporation**
  **Osaka 530-0011 (JP)**

(72) Inventors:
- **MAEDA, Katsuhiro**
  **Kanazawa-shi, Ishikawa 920-1192 (JP)**
- **TANIGUCHI, Tsuyoshi**
  **Kanazawa-shi, Ishikawa 920-1192 (JP)**
- **NISHIMURA, Tatsuya**
  **Kanazawa-shi, Ishikawa 920-1192 (JP)**
- **HASEGAWA, Hiroshi**
  **Kanazawa-shi, Ishikawa 920-1192 (JP)**
- **MORITA, Futo**
  **Kanazawa-shi, Ishikawa 920-1192 (JP)**
- **YUNOSHITA, Koki**
  **Kanazawa-shi, Ishikawa 920-1192 (JP)**
- **BISWAS, Foni Bushon**
  **Kanazawa-shi, Ishikawa 920-1192 (JP)**
- **MASHIO, Asami**
  **Kanazawa-shi, Ishikawa 920-1192 (JP)**
- **ENDO, Masaru**
  **Tokyo 108-8230 (JP)**
- **ARAI, Takashi**
  **Tokyo 108-8230 (JP)**

(74) Representative: **Grünecker Patent- und Rechtsanwälte**
**PartG mbB**
**Leopoldstraße 4**
**80802 München (DE)**

# (54) CELLULOSE DERIVATIVE AND METAL ADSORBENT CONTAINING SAID CELLULOSE DERIVATIVE

(57) The present disclosure provides a cellulose derivative which has excellent storage stability and can selectively adsorb a valuable metal and a toxic metal. The cellulose derivative of the present disclosure has a repeating unit represented by Formula (I) below. In Formula (I) below, $R^a$s are identical or different and are a hydrogen atom or a group represented by Formula (a) below. In Formula (a) below, ring Z represents a heterocycle containing a nitrogen atom as a heteroatom, and $R^1$ represents a single bond or an alkylene group having from 1 to 10 carbons. Four $R^2$s are identical or different, and each represent an alkyl group having from 1 to 10 carbons. At least one of all the $R^a$s included in the cellulose derivative is a group represented by Formula (a) below:

EP 4 163 009 A1

[Chem. 1]

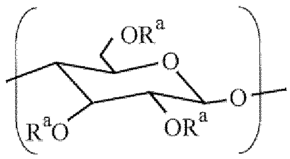

(I)

[Chem. 2]

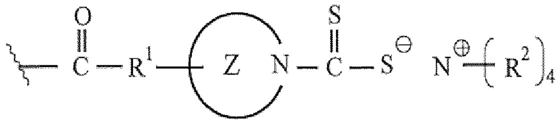

(a)

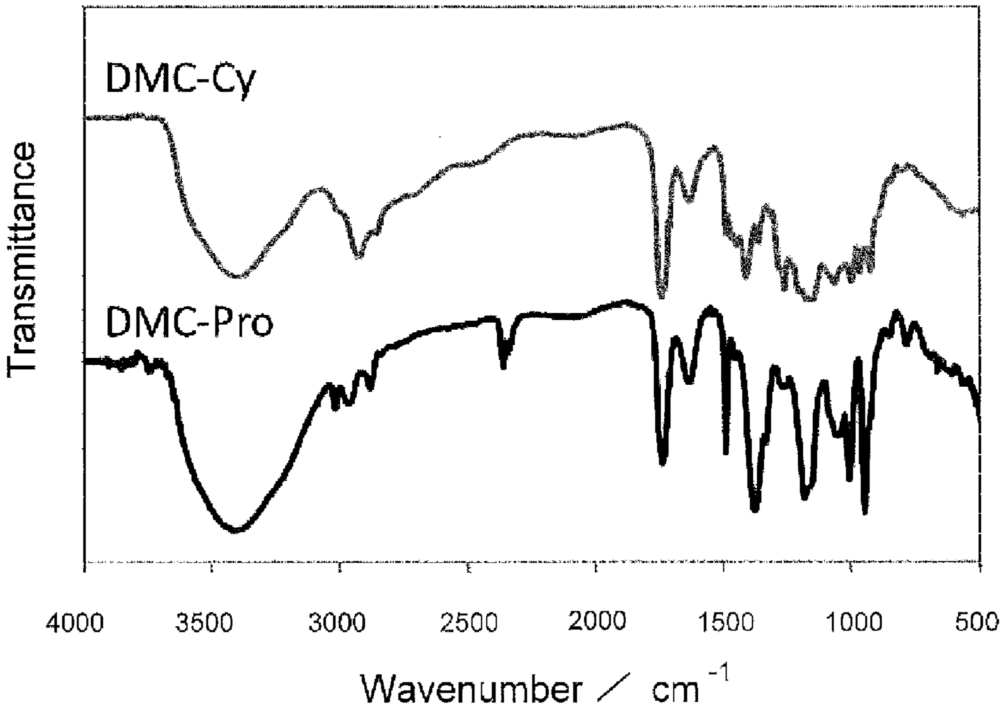


FIG. 1

## Description

### Technical Field

The present disclosure relates to a novel cellulose derivative, a metal adsorbent containing the cellulose derivative, and a method for recovering a metal using the cellulose derivative.

### Background Art

In recent years, valuable metals such as ruthenium, cobalt, rhodium, iridium, nickel, palladium, platinum, copper, silver, and gold are used in electronic materials, electronic components, industrial catalysts, metal plating, and the like. In addition, in the medical field, platinum is used in an anticancer agent, and palladium is used in dental treatment.

In Japan, despite large quantities of valuable metals are consumed, most of them are dependent on imports. Consequently, from the viewpoint of effective use of resources, there is a need to recover and reuse valuable metals contained in the plant effluent and waste. In addition, there is also a need to remove toxic metals from water or the like contaminated with toxic metals.

Patent Document 1 describes that binding iminodiacetic acid or dialkyl amine to a cellulose having a crystallinity of 70% or less introduces a large amount of functional groups capable of forming a chelate with precious metal ions, and, with a cellulose derivative obtained by such a process, the precious metal can be recovered efficiently.

### Citation List

### Patent Document

Patent Document 1: JP 2009-247981 A

### Summary of Invention

### Technical Problem

The present inventors have noticed that the cellulose derivative easily forms a salt with an alkali metal ion or an alkaline earth metal ion, and the cellulose derivative adsorbs the alkali metal ion or alkaline earth metal ion, abundantly existing in nature, together with a precious metal ion. Thus, it is not possible to selectively adsorb the precious metal ion.

Then, the present inventors have found that a cellulose derivative into which a chain dithiocarbamate group has been introduced does not adsorb the alkali metal ion or alkaline earth metal ion, and can selectively adsorb a valuable metal ion and a toxic metal ion.

However, it has been found that the cellulose derivative into which the chain dithiocarbamate group has been introduced has low storage stability, and the ability to adsorb metal ions is likely to deteriorate with time.

Therefore, an object of the present disclosure is to provide a cellulose derivative which has excellent storage stability and can selectively adsorb a valuable metal and a toxic metal.

Another object of the present disclosure is to provide a precursor of the cellulose derivative.

Still another object of the present disclosure is to provide a metal adsorbent which has excellent storage stability, can selectively adsorb a valuable metal and a toxic metal, and can recover the metals.

Yet another object of the present disclosure is to provide a method for recovering a metal using the metal adsorbent.

Yet still another object of the present disclosure is to provide a method for producing the metal adsorbent.

### Solution to Problem

As a result of diligent research to solve the problems described above, the present inventors have found, regarding the cellulose derivative, the following:

1. When the cellulose derivative forms a hard base as defined in the hard soft acid base theory (HSAB), the cellulose derivative easily forms a salt with a hard acid (or a hard acid or an intermediate acid) and adsorbs the hard acid, whereas when the cellulose derivative forms a soft base, the cellulose derivative easily forms a salt with a soft acid or an intermediate acid and adsorbs the soft acid or the intermediate acid;
2. A valuable metal ion or a toxic metal ion is a soft acid or an intermediate acid, and is easily adsorbed to the cellulose derivative that forms a soft base;

3. A hard acid such as an alkali metal ion and an alkaline earth metal ion is hardly adsorbed to the cellulose derivative that form a soft base;
4. The cellulose derivative into which the chain dithiocarbamate group has been introduced forms a soft base. This cellulose derivative easily adsorbs the valuable metal ion and the toxic metal ion, but hardly adsorb the alkali metal ion or alkaline earth metal ion; and
5. A cyclic dithiocarbamate group (= a dithiocarbamate group including a ring structure) hardly decomposes, and thus a cyclic dithiocarbamate group-containing cellulose derivative has excellent storage stability and can maintain a good adsorption capability for metal ions for a long period of time.

The present disclosure has been completed based on these findings.
Hence, the present disclosure provides a cellulose derivative having a repeating unit represented by Formula (I) below:

[Chem. 1]

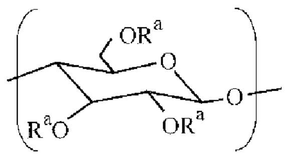

(I)

where $R^a$s are identical or different and are a hydrogen atom or a group represented by Formula (a) below, and at least one of all the $R^a$s included in the cellulose derivative is a group represented by Formula (a) below:

[Chem. 2]

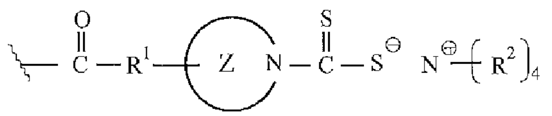

(a)

where ring Z represents a heterocycle containing a nitrogen atom as a heteroatom, $R^1$ represents a single bond or an alkylene group having from 1 to 10 carbons, and four $R^2$s are identical or different, and each represent an alkyl group having from 1 to 10 carbons.

The present disclosure provides a cellulose derivative in which a total average degree of substitution of the group represented by Formula (a) is 0.1 to 3.0.
The present disclosure also provides a metal adsorbent including the cellulose derivative.
The present disclosure also provides the metal adsorbent in which the metal adsorbent is an adsorbent of a metal whose cation is classified as a soft acid or an intermediate acid in the HSAB theory.
The present disclosure also provides the metal adsorbent which is an adsorbent of at least one metal selected from titanium, vanadium, manganese, iron, cobalt, nickel, copper, zinc, gallium, arsenic, cadmium, indium, lead, bismuth, ruthenium, rhodium, iridium, palladium, platinum, silver, and gold.
The present disclosure provides a method for recovering a metal, the method including allowing the cellulose derivative to adsorb a metal dissolved in a solution to recover the metal.
The present disclosure provides a method for producing a metal adsorbent,
the method including: preparing the cellulose derivative through the following 1) to 3); and producing a metal adsorbent containing the cellulose derivative using the prepared cellulose derivative:

1) reacting cellulose with a compound represented by Formula (2) below to produce a cellulose derivative (II) having a repeating unit represented by Formula (II):

[Chem. 3]

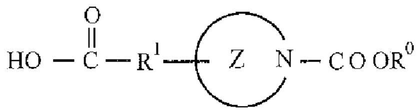

(2)

where ring Z represents a heterocycle containing a nitrogen atom as a heteroatom, and $R^1$ represents a single bond or an alkylene group having from 1 to 10 carbons, and $R^0$ represents a monovalent hydrocarbon group or a monovalent heterocyclic group,

[Chem. 4]

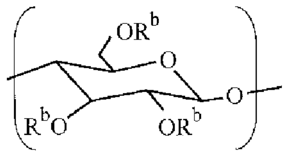

(II)

where $R^b$s are identical or different and are a hydrogen atom or a group represented by Formula (b) below:

[Chem. 5]

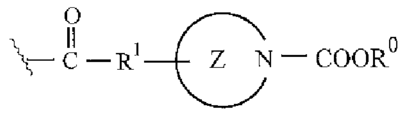

(b)

where ring Z, $R^1$, and $R^0$ are the same as described above, and at least one of all the $R^b$s included in the cellulose derivative is the group represented by Formula (b);

2) deprotecting an imino group of the cellulose derivative (II) to produce a cellulose derivative (III) having a repeating unit represented by Formula (III):

[Chem. 6]

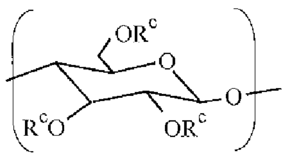

(III)

where $R^c$s are identical or different and are a hydrogen atom or a group represented by Formula (c) below:

[Chem. 7]

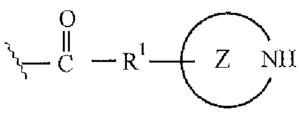

(c)

where ring Z, $R^1$ are the same as described above, at least one of all the $R^c$s included in the cellulose derivative is a group represented by Formula (c) below, and further the group represented by Formula (c) may form a salt; and

3) reacting the cellulose derivative (III), in the presence of a sulfur compound, with a quaternary ammonium compound represented by Formula (3) below:

$N^+(R^2)_4X^-$ (3),

where four $R^2$s are identical or different, and each represent an alkyl group having from 1 to 10 carbons, and $X^-$ represents a counter anion.

Further, the present disclosure provides a cellulose derivative having a repeating unit represented by Formula (II) below:

[Chem. 8]

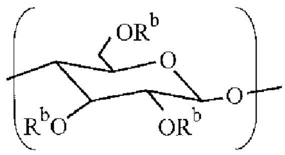

(II)

where $R^b$s are identical or different and are a hydrogen atom or a group represented by Formula (b) below, and at least one of all the $R^b$s included in the cellulose derivative is a group represented by Formula (b) below:

[Chem. 9]

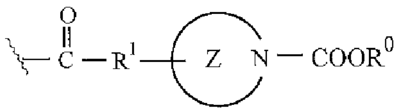

(b)

where ring Z represents a heterocycle containing a nitrogen atom as a heteroatom, $R^1$ represents a single bond or an alkylene group having from 1 to 10 carbons, and $R^0$ represents a monovalent hydrocarbon group or a monovalent heterocyclic group.

Further, the present disclosure provides a cellulose derivative having a repeating unit represented by Formula (III) below:

[Chem. 10]

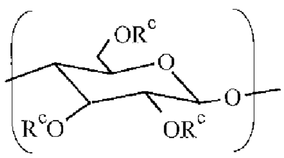

(III)

where $R^c$s are identical or different and are a hydrogen atom or a group represented by Formula (c) below, at least one of all the $R^c$s included in the cellulose derivative is a group represented by Formula (c) below, and further the group represented by Formula (c) below may form a salt,

[Chem. 11]

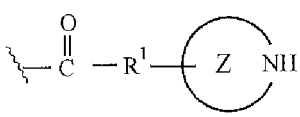

(c)

where ring Z represents a heterocycle containing a nitrogen atom as a heteroatom, and $R^1$ represents a single bond or an alkylene group having from 1 to 10 carbons.

Advantageous Effects of Invention

The cellulose derivative of the present disclosure has the following characteristics: the cellulose derivative of the present disclosure easily adsorbs a metal ion (e.g., a valuable metal ion and a toxic metal ion) which is classified as a soft acid or an intermediate acid in the HSAB theory, and hardly adsorbs a metal ion (e.g., an alkali metal ion and an alkaline earth metal ion) which is classified as a hard acid. Further, the cellulose derivative has excellent storage stability.

Utilization of the cellulose derivative makes it possible to perform selective adsorption and recovery of a valuable metal ion and a toxic metal ion from a solution containing a valuable metal ion, a toxic metal ion, an alkali metal ion, and an alkaline earth metal ion in a mixed form.

Furthermore, combustion of this cellulose derivative does not produce problematic exhaust fumes. Thus, through the combustion of the cellulose derivative to which metal ions have been adsorbed, the metal can be easily recovered.

Since the cellulose derivative also has the above characteristics, the cellulose derivative can be preferably used as an adsorbent (particularly, a valuable metal adsorbent) of a metal whose cation is classified as a soft acid or an intermediate acid in the HSAB theory. When the metal adsorbent material is used, the metal (particularly, a valuable metal) can be efficiently and selectively adsorbed and recovered from the plant effluent and waste, and the recovered metal (particularly, valuable metal) can be reused.

In addition, the cellulose derivative can be preferably used as a toxic metal removal agent. Then, when the metal adsorbent is used, a toxic metal can be efficiently and selectively adsorbed and removed from water contaminated with the toxic metal. Further, the cellulose derivative to which the toxic metal has been adsorbed is combusted and reduced in volume, and thus it is possible to reduce the cost of disposal such as landfill.

Brief Description of Drawings

FIG. 1 is a diagram showing IR spectra of DMC-Pro obtained in Example 1 and DMC-Cy obtained in Example 2.

Description of Embodiments

Cellulose Derivative

The cellulose derivative of the present disclosure (hereinafter, sometimes referred to as "cellulose derivative (I)") has a repeating unit represented by Formula (I) below:

[Chem. 12]

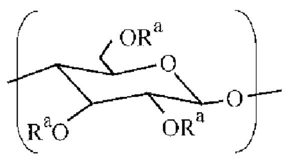

(I)

where $R^a$s are identical or different and are a hydrogen atom or a group represented by Formula (a) below, and at least one of all the $R^a$s included in the cellulose derivative is a group represented by Formula (a) below:

[Chem. 13]

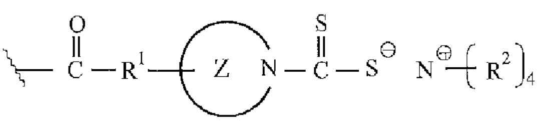

(a)

where ring Z represents a heterocycle containing a nitrogen atom as a heteroatom, $R^1$ represents a single bond or an alkylene group having from 1 to 10 carbons, and four $R^2$s are identical or different, and each represent an alkyl group having from 1 to 10 carbons.

Ring Z is a heterocycle containing a nitrogen atom as a heteroatom. Ring Z may contain a heteroatom other than the nitrogen atom.

Ring Z is, in particular, preferably a heterocycle containing only a nitrogen atom as a heteroatom (particularly, a non-aromatic heterocycle). Further, ring Z is, for example, a 3 to 10-membered ring, in particular, preferably a 4 to 8-membered ring, and especially preferably a 4 to 6-membered ring.

Examples of ring Z include 5-membered rings such as a pyrrolidine ring; and 6-membered rings such as a piperidine ring and a piperazine ring.

Examples of the alkylene group having from 1 to 10 carbons of $R^1$ include linear or branched alkylene groups, such as a methylene group, a methylmethylene group, a dimethylmethylene group, an ethylene group, a 2-methylethylene group, a 1,2-dimethylethylene group, a propylene group, a trimethylene group, and a 2-methyltrimethylene group.

$R^1$ is preferably a single bond or an alkylene group having from 1 to 2 carbons.

Examples of the alkyl group having from 1 to 10 carbons of $R^2$ include linear or branched alkyl groups, such as a methyl group, an ethyl group, a propyl group, an isopropyl group, a butyl group, an isobutyl group, an s-butyl group, a t-butyl group, and a pentyl group.

$R^2$ is preferably an alkyl group having from 1 to 3 carbons.

The group represented by Formula (a) is, in particular, preferably a group represented by Formula (a-1) below or a group represented by Formula (a-2) below. $R^2$ in the formula below is the same as described above.

[Chem. 14]

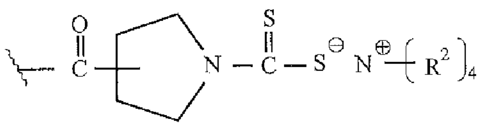
(a-1)

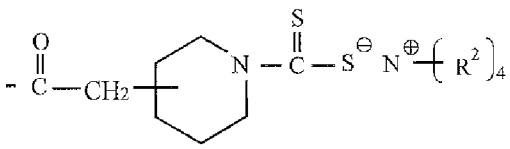
(a-2)

The group represented by Formula (a) is, in particular, preferably a group represented by Formula (a-1') below or a group represented by Formula (a-2') below. $R^1$ in the formula below is the same as described above.

[Chem. 15]

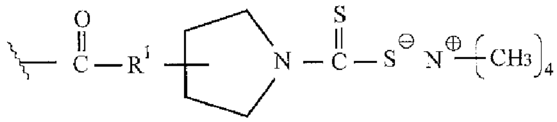
(a-1')

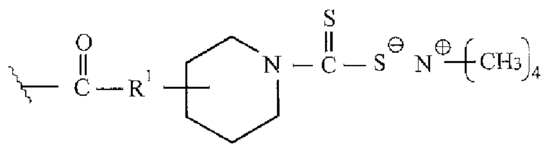
(a-1')

A total average degree of substitution of the group represented by Formula (a) (preferably, a group represented by Formula (a-1), (a-2), (a-1[1]), or (a-2')) (average of degree of substitution of hydrogen atoms of hydroxyl groups at 2, 3 and 6 positions of glucose units constituting cellulose for the group) is, for example, from 0.1 to 3.0, preferably from 1.0 to 3.0, and particularly preferably from 2.0 to 3.0. When the cellulose derivative (I) contains the group in the above-described range, the cellulose derivative exhibits an excellent adsorption capability for metals (particularly, an adsorption capability for valuable metals and an adsorption capability for toxic metals), and thus this is preferred.

A shape of the cellulose derivative (I) is not particularly limited as long as the effect of the present disclosure is not impaired, and examples thereof include a sheet shape, a spherical shape (e.g., a true spherical shape, a substantially true spherical shape, an elliptically spherical shape), a polyhedral shape, a rod shape (e.g., a cylindrical shape, a prismatic shape), a flaky shape, and an irregular shape.

The cellulose derivative (I) has the group represented by Formula (a) above, and the group includes a dithiocarbamate group classified as a soft base in the HSAB theory, and thus the cellulose derivative (I) has an excellent adsorption capability toward a metal ion (e.g., at least one metal ion selected from a titanium ion, a vanadium ion, a manganese ions, an iron ion, a cobalt ion, a nickel ion, a copper ion, a zinc ion, a gallium ion, an arsenic ion, a cadmium ion, an indium ion, a lead ion, a bismuth ion, a ruthenium ion, a rhodium ion, an iridium ion, a palladium ion, a platinum ion, a silver ion, and a gold ion) classified as a soft acid or an intermediate acid in the HSAB theory.

A (saturated) adsorption capacity of the cellulose derivative (I) for metal ion (e.g., valuable metal ion) classified as a soft acid or an intermediate acid in the HSAB theory is, for example, 1 mol/kg or greater, preferably 2 mol/kg or greater, more preferably 2.5 mol/kg or greater, still more preferably 3 mol/kg, particularly preferably 3.5 mol/kg or greater, and most preferably 5 mol/kg or greater.

An adsorption capacity for a palladium ion is, for example, 1 mol/kg or greater, and preferably 1.5 mol/kg or greater, and more preferably 2 mol/kg or greater.

An adsorption capacity for a platinum ion is, for example, 1 mol/kg or greater, and preferably 1.2 mol/kg or greater.

An adsorption capacity for a silver ion is, for example, 1 mol/kg or greater, preferably 2 mol/kg or greater, more preferably 3 mol/kg or greater, and particularly preferably 3.5 mol/kg or greater.

An adsorption capacity for a gold ion is, for example, 1 mol/kg or greater, preferably 1.5 mol/kg or greater, more preferably 2 mol/kg or greater, and particularly preferably 2.5 mol/kg or greater.

A recovery percentage of a valuable metal ion (e.g., an ion of at least one metal selected from vanadium, iron, cobalt, nickel, copper, zinc, arsenic, cadmium, lead, bismuth, rhodium, iridium, palladium, platinum, silver, and gold) classified as a soft acid or an intermediate acid in the HSAB theory by the cellulose derivative (I) is, for example, 85% or greater, preferably 90% or greater, and particularly preferably 95% or greater.

A recovery percentage of a precious metal ion (metal ion selected from, for example, a cobalt ion, an iridium ion, a nickel ion, a palladium ion, a platinum ion, a copper ion, a silver ion, and a gold ion) by the cellulose derivative (I) is, for example, 85% or greater, preferably 90% or greater, and particularly preferably 95% or greater.

In the present disclosure, the recovery percentage of a metal ion is a recovery percentage in a case where 5 mg of the cellulose derivative (I) is immersed in a solution (pH 3) having a metal ion concentration of 10 μmol/L at 25°C and stirred at 200 rpm for 20 minutes, and is calculated from the Eq. described in Examples.

Since the cellulose derivative (I) has the group represented by Formula (a) above, the cellulose derivative (I) has an excellent adsorption capability for a toxic metal ion (e.g., metal ion selected from an arsenic ion, a cadmium ion, and a lead ion) classified as a soft acid or an intermediate acid in the HSAB theory.

A (saturated) adsorption capacity of the cellulose derivative (I) for the toxic metal ion is, for example, 0.2 mol/kg or greater, preferably 0.3 mol/kg or greater, more preferably 0.5 mol/kg or greater, still more preferably 0.6 mol/kg or greater, particularly preferably 1 mol/kg or greater, and most preferably 2 mol/kg or greater.

An adsorption capacity for an arsenic ion is, for example, 0.2 mol/kg or greater, preferably 0.5 mol/kg or greater, and more preferably 1 mol/kg or greater.

An adsorption capacity for a cadmium ion is, for example, 0.5 mol/kg or greater, preferably 1 mol/kg or greater, and more preferably 1.5 mol/kg or greater.

An adsorption capacity for a lead ion is, for example, 0.5 mol/kg or greater, preferably 1 mol/kg or greater, and more preferably 1.5 mol/kg or greater.

A recovery percentage of a toxic metal ion (e.g., an ion of a metal selected from arsenic, cadmium, and lead) by the cellulose derivative (I) is, for example, 85% or greater, preferably 90% or greater, and particularly preferably 95% or greater.

Since the cellulose derivative (I) has the group represented by Formula (a) above, the cellulose derivative (I) has a low adsorption capability for a metal ion (particularly, at least one ion selected from an alkali metal ion and an alkaline earth metal ion) classified as a hard acid in the HSAB theory.

A (saturated) adsorption capacity for a metal ion classified as a hard acid in the HSAB theory is, for example, 2.0 mol/kg or less, more preferably 1.6 mol/kg or less, still more preferably 0.8 mol/kg or less, particularly preferably 0.4 mol/kg or less, most preferably 0.1 mol/kg or less, and especially preferably 0.01 mol/kg or less.

An adsorption capacity for an alkali metal ion (e.g., a sodium ion, a potassium ion) is, for example, 1.6 mol/kg or less, preferably 0.8 mol/kg or less, more preferably 0.4 mol/kg or less, more preferably 0.2 mol/kg or less, and particularly preferably 0.1 mol/kg or less.

An adsorption capacity for an alkaline earth metal ion (e.g., a magnesium ion, a calcium ion, a strontium ion, a barium ion) is, for example, 1.6 mol/kg or less, preferably 1.0 mol/kg or less, more preferably 0.8 mol/kg or less, still more preferably 0.4 mol/kg or less, particularly preferably 0.2 mol/kg or less, and most preferably 0.1 mol/kg or less.

A recovery percentage of a metal ion (classified as the hard acid in the HSAB theory) by the cellulose derivative (I) is, for example, 10% or less, preferably 5% or less, particularly preferably 1% or less, and most preferably 0.1% or less.

A recovery percentage of an alkali metal ion (e.g., a sodium ion, a potassium ion) by the cellulose derivative (I) is, for example, 10% or less, preferably 5% or less, particularly preferably 1% or less, and most preferably 0.1% or less.

A recovery percentage of an alkaline earth metal ion (e.g., a magnesium ion, a calcium ion, a strontium ion, and a barium ion) by the cellulose derivative (I) is, for example, 10% or less, preferably 5% or less, and particularly preferably 2% or less.

Further, since the cellulose derivative (I) has the group represented by Formula (a) above, the adsorption capability for base metal ions such as an iron ion, an aluminum ion, and a manganese ion is low.

A (saturated) adsorption capacity for the base metal ions (e.g., an iron ion, an aluminum ion, a manganese ion) is, for example, 2.0 mol/kg or less, more preferably 1.6 mol/kg or less, preferably 1.0 mol/kg or less, still more preferably 0.8 mol/kg or less, particularly preferably 0.4 mol/kg or less, most preferably 0.1 mol/kg or less, and especially preferably 0.01 mol/kg or less.

A recovery percentage of the base metal ions (particularly, an iron ion, an aluminum ion, a manganese ion) by the cellulose derivative (I) is, for example, 60% or less, preferably 50% or less, more preferably 45% or less, still more preferably 30% or less, particularly preferably 20% or less, most preferably 10% or less, and especially preferably 5% or less.

In addition, the cellulose derivative (I) has the group represented by Formula (a), and in this regard, the strain of ring Z (e.g., a heterocycle such as piperidine or pyrrolidine) in the group suppresses the proton transfer to a nitrogen atom as a starting point of decomposition of a dithiocarbamate group. Thus, the cellulose derivative (I) has excellent storage stability. For example, even after subjected to a test in which the cellulose derivative is left stand in an air atmosphere at 40°C for 2 weeks, the cellulose derivative still possesses the metal recovery capacity as high as the metal recovery capacity before the test. The retention rate of metal recovery is, for example, 95% or greater.

The cellulose derivative (I) has a high adsorption capability for a valuable metal ion and a toxic metal ion, but has a low adsorption capability for other ions. Further, the cellulose derivative (I) has excellent storage stability. Accordingly, the cellulose derivative (I) can be preferably used for the purpose of selective recovery of a valuable metal ion and a toxic metal ion from industrial effluents, mine effluents, thermal water, or the like in which the valuable metal ion and toxic metal ion are mixed with other ions.

Metal Adsorbent

The metal adsorbent of the present disclosure includes the cellulose derivative (I) described above.

The metal adsorbent may contain other components, in addition to the cellulose derivative (I), but the proportion of the cellulose derivative (I) is 50 wt.% or greater, preferably 60 wt.% or greater, particularly preferably 70 wt.% or greater, most preferably 80 wt.% or greater, and especially preferably 90 wt.% or greater. When the proportion of the cellulose derivative (I) is less than the range described above, the metal adsorbent tends to have difficulty in efficiently and selectively adsorbing a valuable metal ion and a toxic metal ion. Further, the storage stability tends to decrease.

In addition, the metal adsorbent may contain other cellulose derivatives, in addition to the cellulose derivative (I), but the proportion of the cellulose derivative (I) relative to the total amount of the cellulose derivative included in the metal adsorbent is, for example, 60 wt.% or greater, preferably 70 wt.% or greater, particularly preferably 80 wt.% or greater, most preferably 90 wt.% or greater, and especially preferably 95 wt.% or greater. When the proportion of the cellulose derivative (I) is less than the range described above, the metal adsorbent tends to have difficulty in efficiently and selectively adsorbing a valuable metal ion and a toxic metal ion. Further, the storage stability tends to decrease.

The form of the metal adsorbent is not particularly limited as long as an effect is exerted, and examples thereof include a powder form, a pellet form, a thread form, and a nonwoven fabric form.

The metal adsorbent includes the characteristics of the cellulose derivative (I) described above. Hence, the metal adsorbent has a high adsorption capability for a soft acid or an intermediate acid (e.g., a valuable metal ion and a toxic metal ion) in the HSAB theory, but has a low adsorption capability for a hard acid (e.g., an alkali metal ion, an alkaline earth metal ion) in the HSAB theory. Then, the metal adsorbent has excellent storage stability. Accordingly, the metal adsorbent is preferred for the purpose of selective recovery of a soft acid and an intermediate acid in the HSAB theory from industrial effluents, mine effluents, thermal water, or the like in which a soft acid and an intermediate acid in the HSAB theory are mixed with a hard acid.

Therefore, the metal adsorbent is particularly useful as an adsorbent for a metal (e.g., a valuable metal or a toxic metal, preferably at least one metal selected from titanium, vanadium, manganese, iron, cobalt, nickel, copper, zinc, gallium, arsenic, cadmium, indium, lead, bismuth, ruthenium, rhodium, iridium, palladium, platinum, silver, and gold) which is a metal and whose cation classified as a soft acid or an intermediate acid in the HSAB theory.

Method for Recovering Metal

The method for recovering a metal of the present disclosure includes allowing the cellulose derivative (I) to adsorb a metal dissolved in a solution to recover the metal.

The metal is present as a metal ion in a solution. In the cellulose derivative (I), the group represented by Formula (a) forms a chelate complex with metal ions (particularly, metal ions classified as a soft acid or an intermediate acid in the HSAB theory) contained in the solution, thereby the cellulose derivative (I) adsorbs and recovers the metal ions.

Examples of the metal ion include ions of at least one metal selected from vanadium, iron, cobalt, nickel, copper, zinc, arsenic, cadmium, lead, bismuth, rhodium, iridium, palladium, platinum, silver, and gold.

The method for allowing the cellulose derivative (I) to adsorb a metal dissolved in a solution is not particularly limited, and examples thereof include a method including filling the cellulose derivative (I) into a column or the like, and passing a solution prepared by dissolving a metal through the column, and a method including adding the cellulose derivative (I) to a solution prepared by dissolving a metal and stirring the mixture.

In the method for recovering a metal, it is preferable to adjust the pH of the cellulose derivative (I) to, for example, a range of 1 to 9 (in particular, a range of 1 to 7, especially a range of 2 to 6) from the viewpoint that the adsorption capability for the metal can be further improved and the metal can be more efficiently recovered. The pH of the cellulose derivative can be adjusted using a well-known and commonly used pH adjuster (an acid such as nitric acid or an alkali such as sodium hydroxide).

In addition, after the cellulose derivative (I) adsorbs the metal ions, the cellulose derivative (I) which has adsorbed the metal ion is combusted, and thus the metal can be easily recovered.

Method for Producing Metal Adsorbent

The metal adsorbent can be produced, for example, by performing the following 1), 2), and 3) to prepare the above-described cellulose derivative, and using the prepared cellulose derivative.

[Chem. 16]

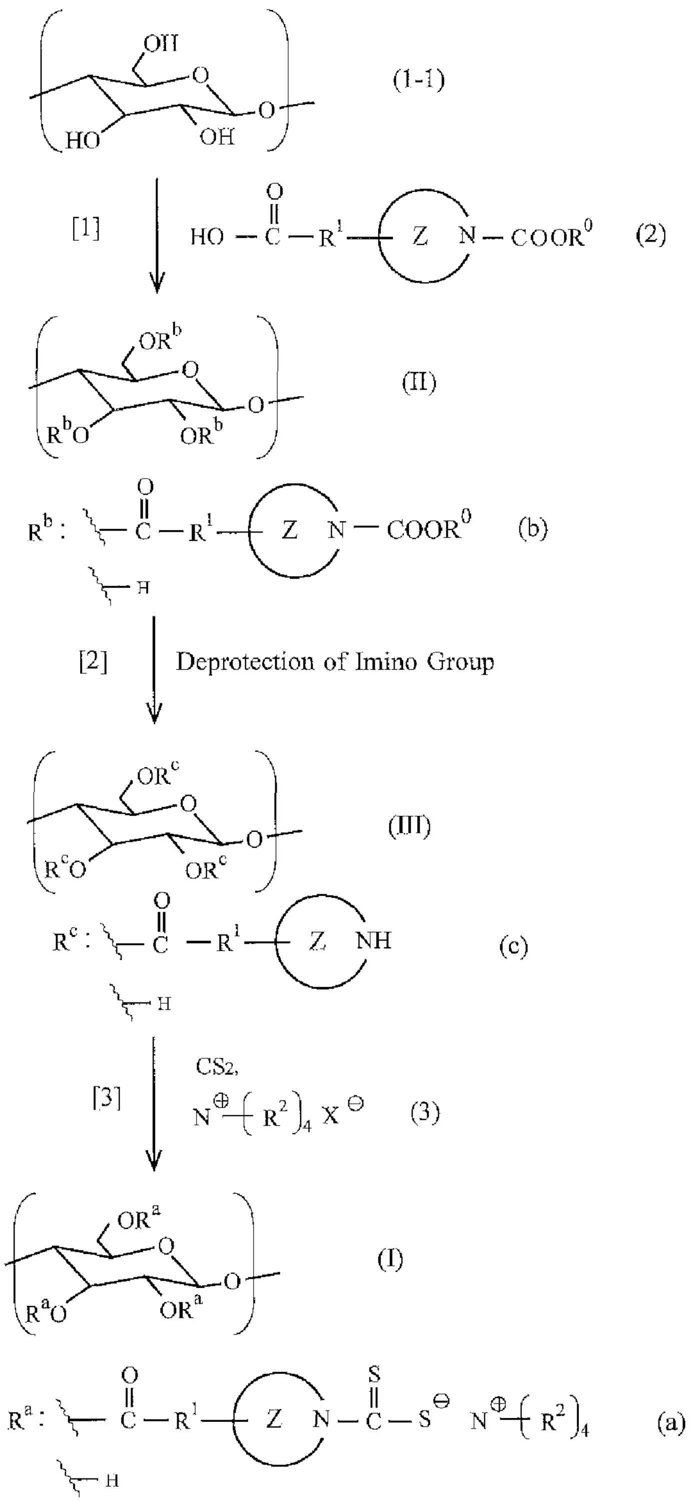


(1-1)
(2)
(II)
(b)
(III)
(c)
(3)
(I)
(a)

where $R^1$, $R^2$, ring Z and $R^a$ in the above formula are the same as those described above.

$R^0$ in the above formula represents a monovalent hydrocarbon group or a monovalent heterocyclic group.

The hydrocarbon group includes aliphatic hydrocarbon groups, alicyclic hydrocarbon groups, aromatic hydrocarbon groups, and groups obtained by bonding these.

Examples of the aliphatic hydrocarbon group include alkyl groups having from 1 to 10 carbons (particularly preferably from 1 to 3 carbons) such as a methyl group, an ethyl group, a propyl group, an isopropyl group, a butyl group, an isobutyl group, an s-butyl group, a t-butyl group, a pentyl group, a hexyl group, and a decyl group; and alkenyl groups having from 2 to 10 carbons (particularly preferably from 2 to 3 carbons) such as a vinyl group, an allyl group, and a 1-butenyl group.

Examples of the alicyclic hydrocarbon group include 3- to 10-membered (particularly preferably 5- to 8-membered) cycloalkyl groups, such as a cyclopropyl group, a cyclobutyl group, a cyclopentyl group, a cyclohexyl group and a cyclooctyl group; 3- to 15-membered (particularly preferably 5- to 8-membered) cycloalkenyl groups, such as a cyclopentenyl group and a cyclohexenyl group; and bridged cyclic hydrocarbon groups, such as a perhydronaphthalen-1-yl group, a norbornyl group, an adamantyl group, a tricyclo[5.2.1.$0^{2,6}$]decan-8-yl group, and a tetracyclo[4.4.0.$1^{2,5}$.$1^{7,10}$] dodecan-3-yl group.

Examples of the aromatic hydrocarbon group include aryl groups having from 6 to 20 carbons such as a phenyl group, a naphthyl group, and an anthracenyl group. Another ring (e.g., an alicyclic ring or the like) may be fused to the aromatic ring constituting the aromatic hydrocarbon group to form a condensed ring. Examples of the group including such a condensed ring include a fluorene group, and the like.

The heterocyclic group has the heterocycle structure with one hydrogen atom removed. The heterocycles include aromatic heterocycles and non-aromatic heterocycles. Examples of the heterocycles include a 3 to 10-membered (preferably 4 to 6-membered) ring having carbon atoms and at least one heteroatom (e.g., oxygen atom, sulfur atom, and nitrogen atom) as atoms constituting the ring, and a condensed ring thereof. Specific examples thereof include heterocycles containing an oxygen atom as a heteroatom (e.g. 3-membered rings, such as an oxirane ring; 4-membered rings, such as an oxetane ring; 5-membered rings, such as a furan ring, a tetrahydrofuran ring, an oxazole ring, an isoxazole ring, and a γ-butyrolactone ring; 6-membered rings, such as a 4-oxo-4H-pyran ring, a tetrahydropyran ring, and a morpholine ring; condensed rings, such as a benzofuran ring, an isobenzofuran ring, a 4-oxo-4H-chromene ring, a chroman ring, and an isochroman ring; crosslinked rings, such as a 3-oxatricyclo[4.3.1.$1^{4,8}$]undecan-2-one ring and a 3-oxatricyclo[4.2.1.$0^{4,8}$]nonan-2-one ring), heterocycles containing a sulfur atom as a heteroatom (e.g. 5-membered rings, such as a thiophene ring, a thiazole ring, an isothiazole ring, and a thiadiazole ring; and 6-membered rings, such as a 4-oxo-4H-thiopyran ring; condensed rings, such as a benzothiophene ring), and heterocycles containing a nitrogen atom as a heteroatom (e.g. 5-membered rings, such as a pyrrole ring, a pyrrolidine ring, a pyrazole ring, an imidazole ring, and a triazole ring; 6-membered rings, such as an isocyanuric ring, a pyridine ring, a pyridazine ring, a pyrimidine ring, a pyrazine ring, a piperidine ring, and a piperazine ring; condensed rings, such as an indole ring, an indoline ring, a quinoline ring, an acridine ring, a naphthyridine ring, a quinazoline ring, and a purine ring).

The hydrocarbon groups or heterocyclic groups may include a substituent of various types (such as a halogen atom, an oxo group, a hydroxyl group, a substituted oxy group (e.g., an alkoxy group, an aryloxy group, an aralkyloxy group, and an acyloxy group), a carboxyl group, a substituted oxycarbonyl group (such as an alkoxycarbonyl group, an aryloxycarbonyl group, and an aralkyloxycarbonyl group), a substituted or unsubstituted carbamoyl group, a cyano group, a nitro group, a substituted or unsubstituted amino group, and a sulfo group).

$R^b$s in the above formula are identical or different and are a hydrogen atom or a group represented by Formula (b) above. At least one of all the $R^b$s included in the cellulose derivative (II) is a group represented by Formula (b) above.

$R^c$s in the above formula are identical or different and are a hydrogen atom or a group represented by Formula (c) above. At least one of all the $R^c$s included in the cellulose derivative (III) is a group represented by Formula (c) above. Further, the group represented by Formula (c) above may form a salt.

1) is a process of reacting the compound represented by Formula (2) above (hereinafter sometimes referred to as "imino acid (2)") with a hydroxyl group of a cellulose (1-1) (= compound having a repeating unit represented by Formula (1-1) above).

The imino acid (2) is a compound in which an imino group of an imino acid is protected with a carbamate-based protecting group ($COOR^0$ group) (or a compound in which a secondary amino group of a cyclic amino acid is protected with a carbamate-based protecting group). Examples of the imino acid include proline, 3-pyrrolidinecarboxylic acid, 2-piperidinecarboxylic acid, 4-piperidinecarboxylic acid, and (4-piperidinyl)acetic acid.

As the carbamate-based protecting group, in particular, a t-butoxycarbonyl group (Boc), a benzyloxycarbonyl group (CBZ), a 9-fluorenylmethyloxycarbonyl group (Fmoc), or the like is preferred in that these groups can be deprotected under mild conditions.

As the cellulose (1-1) used in 1), for example, a cellulose derived from wood pulp (softwood pulp, hardwood pulp) or cotton linter pulp, a crystalline cellulose, or the like can be preferably used. One of these can be used alone or two or more in combination. The pulp may contain a different component such as hemicellulose. The cellulose is preferably used in a finely ground form, which can be prepared, for example, by performing a process of disintegration.

The reaction of the cellulose (1-1) with the imino acid (2) is preferably carried out in the presence of a catalyst. Examples of the catalyst include triethylamine, pyridine, and N,N-dimethyl-4 aminopyridine (DMAP). One of these can be used alone or two or more in combination.

The amount of the catalyst used is, for example, approximately from 0.01 to 1.0 mol per mole of the imino acid (2).

The reaction is preferably carried out in the presence of a condensing agent. Examples of the condensing agent include 1-ethyl-3-(3-dimethylaminopropyl)carbodiimide hydrochloride (EDC-HCl), N,N'-dicyclohexylcarbodiimide, and

N,N'-diisopropylcarbodiimide. One of these can be used alone or two or more in combination.

The amount of the condensing agent used is, for example, approximately from 0.01 to 1.0 mol per mole of the imino acid (2).

The reaction is preferably carried out in the presence of a solvent. Examples of the solvent include aliphatic hydrocarbons such as hexane, heptane, and octane; alicyclic hydrocarbons such as cyclohexane; aromatic hydrocarbons such as benzene, toluene, xylene, and ethylbenzene; halogenated hydrocarbons such as chloroform, dichloromethane, and 1,2-dichloroethane; ethers such as diethyl ether, dimethoxyethane, tetrahydrofuran, and dioxane; ketones such as acetone, methyl ethyl ketone, and methyl isobutyl ketone; esters such as methyl acetate, ethyl acetate, isopropyl acetate, and butyl acetate; amides such as N,N-dimethylformamide, N,N-dimethylacetamide, and N-methylpyrrolidone; nitriles such as acetonitrile, propionitrile, and benzonitrile; alcohols such as methanol, ethanol, isopropyl alcohol, and butanol; and dimethylsulfoxide. One of these can be used alone or two or more in combination.

As the solvent, in particular, an amide such as N,N-dimethylacetamide is preferable, and it is particularly preferable to use a mixture of the solvent with a lithium salt such as lithium chloride from the viewpoint of excellent solubility of cellulose. A concentration of the lithium salt in the solvent can be appropriately adjusted as long as the effect of dissolving cellulose is not impaired, and is, for example, approximately from 1 to 30 wt.%.

The amount of the solvent used is, for example, approximately from 0.5 to 30 times (in weight) the total amount of the reaction base substances. The solvent, when used in an amount greater than the above range, decreases concentrations of the reaction components, and tends to decrease the reaction rate.

The cellulose derivative (II) having a repeating unit represented by Formula (II) above is produced through 1).

The cellulose derivative (II) produced through 1) is useful as a precursor of the metal adsorbent of the present disclosure (more specifically, a precursor of the cellulose derivative (I) constituting the metal adsorbent).

2) is a process of deprotecting the imino group of the cellulose derivative (II) produced through 1) (more specifically, a process of removing the protecting group of the imino group in the group represented by Formula (b), which has been introduced into the cellulose derivative (II).

The cellulose derivative (III) having a repeating unit represented by Formula (III) above is produced through 2).

The method for removing the protecting group of the imino group of the cellulose derivative (II) can be appropriately selected depending on the type of protecting group.

For example, in the case of the cellulose derivative (II) including the protecting group: BOC or the like, the protecting group can be removed by reaction with strong acids such as hydrochloric acid and trifluoroacetic acid. Further, in the cellulose derivative (III) prepared by deprotection using a strong acid, there may be a case where the group represented by Formula (c) may form a salt with a counter anion. For example, in the case of reaction with trifluoroacetic acid as a strong acid, there may be a case where an imino group at the end of the group represented by Formula (c) forms a salt with $CF_3COO^-$ to be "$>N^+H_2 \bullet CF_3COO^-$".

For example, when CBZ is included as a protecting group, the protecting group can be removed by performing a reduction reaction in the presence of a catalyst (e.g., Pd-C).

For example, when Fmoc is included as a protecting group, the protecting group can be removed by the reaction with a secondary amine such as pyridine.

The reaction temperature in 2) is, for example, approximately 0 to 100°C. The reaction time is, for example, approximately from 1 to 24 hours. After completion of the reaction, the resulting reaction product can be separated and purified by a separation means, such as filtration, concentration, distillation, extraction, crystallization, adsorption, recrystallization, or column chromatography; or a separation means in combination of these.

The cellulose derivative (III) produced through 2) is useful as a precursor of the metal adsorbent (more specifically, a precursor of the cellulose derivative (I) constituting the metal adsorbent).

3) is a process of reacting the cellulose derivative (III) produced through 2), in the presence of a sulfur compound, with a quaternary ammonium compound represented by Formula (3) above.

$R^2$ in Formula (3) corresponds to $R^2$ in Formula (a) above. $X^-$ in Formula (3) represents a counter anion, and examples thereof include $OH^-$, $Cl^-$, $Br^-$, $I^-$, $F^-$, $SO_4^{2-}$, $BH_4^-$, $BF_4^-$, $PF_6^-$.

Examples of the quaternary ammonium compound include tetramethylammonium hydroxide and tetraethylammonium hydroxide.

The amount of the quaternary ammonium compound used is, for example, 50 parts by weight or greater relative to 100 parts by weight of the cellulose derivative (III).

Examples of the sulfur compound include carbon disulfide. The amount of the sulfur compound used is, for example, 20 parts by weight or greater relative to 100 parts by weight of the cellulose derivative (III).

The reaction in 3) is preferably carried out in the presence of a solvent. Examples of the solvent include aromatic hydrocarbons such as toluene, xylene, and ethyl benzene; alcohols such as methanol, ethanol, 2-propanol, isopropyl alcohol, and butanol; N-methyl pyrrolidone, dimethylsulfoxide, and N,N-dimethylformamide. Of these, a single type may be used alone, or two or more types thereof may be used in combination. The amount of the solvent used is, for example, approximately from 0.5 to 30 times (in weight) the total amount of the reaction base substances.

The reaction temperature in 3) is, for example, approximately from 0 to 100°C. The reaction time is, for example, approximately from 1 to 24 hours. After completion of the reaction, the resulting reaction product can be separated and purified by a separation means, such as filtration, concentration, distillation, extraction, crystallization, adsorption, recrystallization, or column chromatography; or a separation means in combination of these.

Each of the configurations, their combinations, and the like of the present disclosure above is an example, and addition, omission, substitution, and change of the configuration can be appropriately made without departing from the gist of the present disclosure. Further, the present disclosure is not limited by the embodiments and is limited only by the disclosure of the claims.

## Examples

Hereinafter, the present disclosure will be described more specifically with reference to examples, but the present disclosure is not limited by these examples.

### Example 1 (Preparation of Adsorbent (1))

A two-neck eggplant-shaped flask was charged with the cellulose (1-1) (0.501 g, 3.08 mmol) and dried in vacuo at 90°C for 2 hours. In a nitrogen atmosphere, N,N-dimethylacetamide (15 mL) and lithium chloride (0.99 g) were added to dissolve the cellulose. N,N-dimethyl-4 aminopyridine (2.26 g, 18.5 mmol), N-Boc-L-proline (3.98 g, 18.5 mmol), 1-ethyl-3-(3-dimethylaminopropyl)carbodiimide hydrochloride (EDC-HCl) (3.55 g, 18.5 mmol) and N,N-dimethylacetamide (15 mL) were added to this reaction container, and then the mixture was stirred at room temperature for 24 hours. The reaction solution was poured into water and subjected to reprecipitation to form a solid. The solid was collected by suction filtration. The resulting solid was dissolved in ethanol, reprecipitated with water, and collected by suction filtration. The solid was dried in vacuo to yield a compound represented by Formula below (DMC-Pro-II) (1.81 g, yield 78%) as a white solid.

From the result of $^1$H-NMR measurement, the total average degree of substitution of N-Boc-proline was calculated to be 3.0.

[Chem. 17]

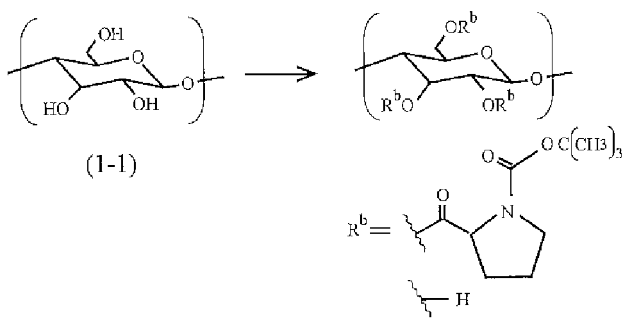

(1-1)

DMC-Pro-II

(DMC-Pro-II)

$^1$H-NMR (500 MHz, $CDCl_3$,55°C):84.00-5.30 (br, 8H), 2.95-4.00 (br, 8H), 1.60-2.56 (br, 12H), 1.43 (br, 27H)

Trifluoroacetic acid (6.6 mL) and the compound (DMC-Pro-II) (1.00 g, 1.33 mmol) were added to a two-neck eggplant-shaped flask under a nitrogen atmosphere, and the mixture was stirred at room temperature for 7.5 hours. The solid precipitated by reprecipitation using diethyl ether was collected by centrifugation, and washed with diethyl ether. The resulting solid was dried in vacuo to yield a salt of a compound (DMC-Pro-III) represented by Formula below as a white solid (979 mg, 92% yield). The results of $^1$H-NMR measurement of DMC-Pro-III are shown below.

[Chem. 18]

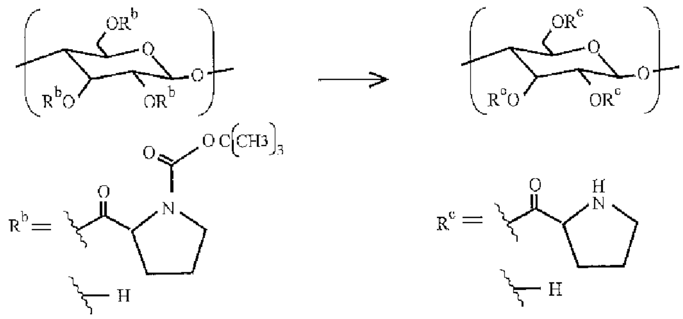

DMC-Pro-II DMC-Pro-III

(DMC-Pro- III)

$^{1}$H-NMR (500 MHz, D2O, r.t.):δ 5.24 (br, 1H), 4.91 (br, 1H), 4.80 (br, overlapped with HDO), 4.45 (br, 3H), 4.21 (br, 1H), 4.06 (br, 1H), 3.81 (br, 1H), 3.67 (br, 1H), 3.32(br, 6H), 2.18-2.54 (br, 3H), 1.60-2.16 (br, 9H)

A salt of the compound (DMC-Pro-III) (0.500 g, 0.628 mmol) was dissolved in dimethylsulfoxide (3.1 mL) in a two-neck eggplant-shaped flask under a nitrogen atmosphere, and carbon disulfide (0.57 mL, 9.4 mmol) was added. The mixture was cooled to about 10°C under light-shielding, a solution of tetramethylammonium hydroxide (10% in methanol) (3.77 mL, 3.77 mmol) was added dropwise, and the resulting solution was stirred for 7 hours while the temperature was increased to room temperature. The solid yielded by reprecipitation in ethanol was collected by centrifugation, and washed with ethanol. The resulting solid was dried in vacuo to yield a cellulose derivative represented by Formula below (DMC-Pro) as a white solid (453 mg, 80% yield). The IR spectrum of DMC-Pro is shown in FIG. 1. DMC-Pro was used as an adsorbent (1).

[Chem. 19]

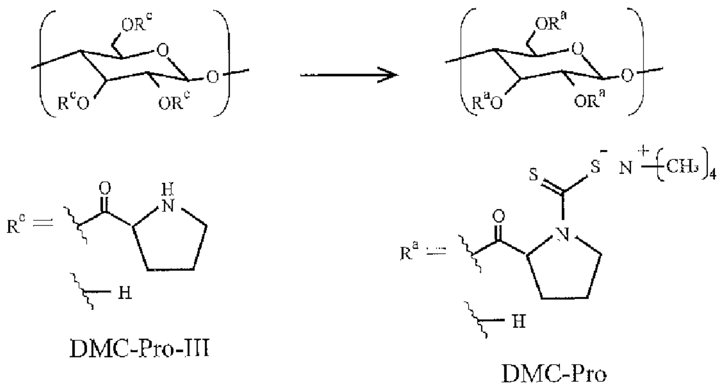

DMC-Pro-III DMC-Pro

(DMC-Pro)

$^{1}$H-NMR (500 MHz, D2O, r.t.):δ 4.40-5.70 (br, overlapped with HDO), 3.35-4.40 (br), 3.15 (br, $CH_3$), 1.20-2.85 (br)

Example 2 (Preparation of Adsorbent (2))

A compound represented by Formula below (DMC-Cy-II) (1.94 g, yield 75%) as a white solid was yielded in the same manner as in Example 1 except that N-Boc-4-piperidylacetic acid was used in place of N-Boc-L-proline.

From the result of $^{1}$H-NMR measurement, the total average degree of substitution of N-Boc-4-piperidylacetic acid was calculated to be 3.0.

[Chem. 20]

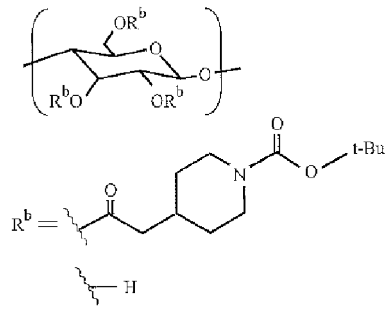

DMC-Cy-II

(DMC-Cy-II)

$^1$H-NMR (500 MHz, $CDCl_3$, 55°C):8 5.05 (br, 1H), 4.68 (br, 1H), 4.53 (br, 1H), 4.34 (br, 1H), 4.03 (br, 7H), 3.76 (br, 1H), 3.51 (br, 1H), 2.72(br, 6H), 2.29 (br, 2H), 2.10 (br, 4H), 1.88 (br, 2H), 1.79 (br, 1H), 1.70 (br, 2H), 1.60 (br, 4H), 1.45 (br, 27H), 1.19 (br, 2H), 1.07 (br, 4H)

A compound represented by Formula below (DMC-Cy-III) (997 mg, 95% yield) as a white solid was yielded in the same manner as in Example 1 except that the compound (DMC-Cy-II) was used.

The results of $^1$H-NMR measurement of DMC-Cy-III are shown below.

[Chem. 21]

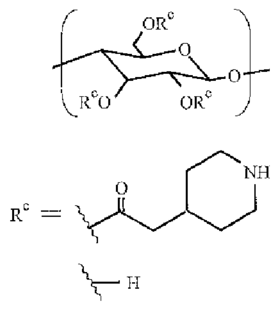

DMC-Cy-III

(DMC-Cy-III)

$^1$ H-NMR (500 MHz, D2O, r.t.):δ 5.14 (br, 1H), 4.80 (br, overlapped with HDO), 4.66 (br, 1H), 4.54 (br, 1H), 4.20 (br, 1H), 3.81 (br, 2H), 3.47 (br, 6H), 3.04(br, 6H), 1.70-2.60 (br, 15H), 1.26-1.64 (br, 6H)

A salt of the compound (DMC-Cy-III) (0.500 g, 0.568 mmol) was dissolved in dimethylsulfoxide (2.8 mL) in a two-neck eggplant-shaped flask under a nitrogen atmosphere, and carbon disulfide (0.52 mL, 8.5 mmol) was added. The mixture was cooled to about 10°C under light-shielding, a solution of tetramethylammonium hydroxide (10% in methanol) (3.41 mL, 3.41 mmol) was added dropwise, and the resulting solution was stirred for 24 hours while raising the temperature to room temperature. The resulting solid was collected by centrifugation, washed with methanol, and then dried in vacuo to yield a cellulose derivative represented by Formula below (DMC-Cy) as a white solid (381 mg, 68% yield). The IR spectrum of DMC-Cy is shown in FIG. 1. DMC-Cy was used as an adsorbent (2).

[Chem. 22]

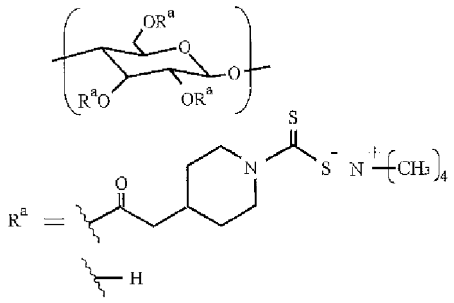

DMC-Cy

(DMC-Cy)

$^1$H-NMR (500 MHz, acetic acid-d4, r.t.):δ 5.20 (br), 4.81 (br), 4.65 (br), 4.16(br), 3.80(br), 3.52(br), 3.20(br, $CH_3$), 3.07(br), 2.48(br), 1.80-2.34 (overlapped with $CH_3COOH$), 1.35-1.75 (m)

Comparative Example 1 (Preparation of Adsorbent (3))

A compound represented by Formula below (DMC-2-II) as a white solid was yielded in the same manner as in Example 1 except that N-Boc-β-alanine was used in place of N-Boc-L-proline.

From the result of $^1$H-NMR measurement, the total average degree of substitution of N-Boc-β-alanine was calculated to be 3.0.

A compound represented by Formula below (DMC-2-III) as a white solid was yielded in the same manner as in Example 1 except that the compound (DMC-2-II) was used.

A compound represented by Formula below (DMC-2) as a white solid was yielded in the same manner as in Example 2 except that the compound (DMC-2-III) was used. DMC-2 was used as an adsorbent (3).

[Chem. 23]

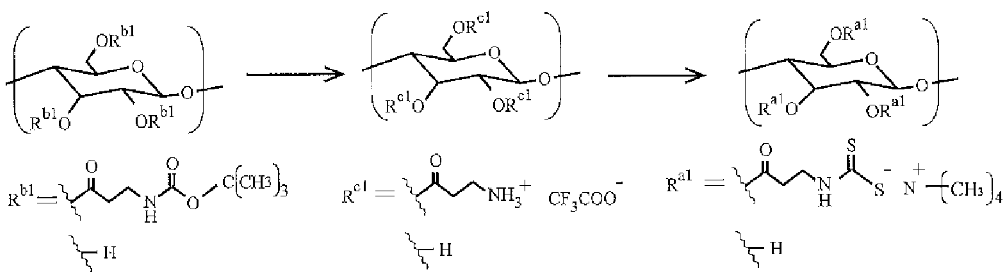

DMC-2-II DMC-2-III DMC-2

Recovery percentage of Metal

With respect to the adsorbents (1) and (3) obtained in Examples and Comparative Examples, the recovery percentage of metals was evaluated by the following methods.

10 mL of the metal ion test solution was charged into a 100-mL centrifugation tube, 5 mg of the adsorbent (1) classified into a particle size of 212-600 μm was added to the centrifugation tube, and the content of the tube was stirred at 25°C and 200 rpm for 20 minutes. Thereafter, the content of the tube was filtered through a membrane filter (nitrocellulose, pore size: 0.45 μm), and the concentration of metal ions in the filtrate ($C_e$: mol/L) was quantified by inductively coupled plasma (ICP) atomic emission spectroscopy (iCAP6300, manufactured by Thermo Fischer Scientific, Waltham, Massachusetts). The initial concentration of metal ions in the test solution was defined as $C_0$ (mol/L), the recovery percentage (%) of metal ions was calculated from the following Eq.:

$$\text{Recovery percentage} = (C_0 - C_e)/C_0 \times 100$$

The metal ion test solution was prepared by diluting a standard solution of metal ions with a hydrochloric acid solution or a nitric acid solution to obtain a metal ion concentration of 10 μmol/L and a pH of 3.

Standard solutions (1000 mg/L) of palladium (Pd(II)), platinum (Pt(IV)), silver (Ag(I)), gold (Au(III)), vanadium (V(IV)), manganese (Mn(II)), zinc (Zn(II)), aluminum (Al(III)), lead (Pb(II)), arsenic (As(III)), bismuth (Bi(II)), sodium (Na(I)), potassium (K(I)), magnesium (Mg(II)), calcium (Ca(II)), strontium (Sr(II)), and barium (Ba(II)), manufactured by Kanto Chemical (Tokyo, Japan), were used.

Standard solutions (1000 mg/L) of cobalt (Co(II)), nickel (Ni(II)), copper (Cu(II)), and iron (Fe(III)), cadmium (Cd(II)), manufactured by Wako Pure Chemical (Osaka, Japan), were used.

Ir (III) standard solution, manufactured by Across Organics, was used.

The result is shown in Table 1 below.

[Table 1]

Table 1

| Metal ion | Recovery percentage (%) | |
|---|---|---|
| | Adsorbent (1) | Adsorbent (3) |
| Co(II) ion | 100 | 94 |
| Ir(III) ion | 100 | 94 |
| Ni(II) ion | 100 | 100 |
| Pd(II) ion | 100 | 94 |
| Pt(IV) ion | 100 | 100 |
| Cu(II) ion | 100 | 100 |
| Ag(I) ion | 100 | 100 |
| Au(III) ion | 100 | 100 |
| V(IV) ion | 100 | 50 |
| Mn(II) ion | 7 | 7.3 |
| Fe(III) ion | 100 | 45 |
| Zn(II) ion | 100 | 100 |
| Cd(II) ion | 100 | 100 |
| Al(III) ion | 0 | 31 |
| Pb(II) ion | 100 | 100 |
| As(III) ion | 100 | 100 |
| Bi(II) ion | 100 | 100 |
| Na(I) ion | 0 | 0 |
| K(I) ion | 0 | 0 |
| Mg(II) ion | 0 | 0.03 |
| Ca(II) ion | 0 | 0.26 |
| Sr(II) ion | 0.3 | 1 |
| Ba(II) ion | 0.3 | 1.4 |

From Table 1, it can be seen that the cellulose derivative of the present disclosure can selectively adsorb metal ions classified as a soft acid or an intermediate acid in the HSAB theory, to an extent equal to or greater than a cellulose derivative having a structure in which a chain dithiocarbamate group is introduced into the cellulose.

Saturated Adsorption Capacity for Valuable Metal)

The saturated adsorption capacity of the adsorbents (1) and (2) obtained in the examples for the valuable metals was evaluated by the following method (batch method).

10 mL of the solution containing metal ions and 5 mg of the adsorbent classified into a particle size of 212-600 μm were added to a 100-mL centrifugation tube, and the content of the tube was stirred at 35°C and 200 rpm until equilibrium was reached.

The content of the tube was filtered through a membrane filter (nitrocellulose, pore size: 0.45 μm), and the concentration of the metal ions in the filtrate ($C_e$: mol/L) was quantified by inductively coupled plasma (ICP) atomic emission spectroscopy (iCAP6300, manufactured by Thermo Fischer Scientific, Waltham, Massachusetts). The initial concentration of metal ions in the solution was defined as $C_0$ (mol/L), the initial fluid volume of the solution containing metal ions was defined as Vo (L), the weight of the adsorbent used was defined as m (kg), and the adsorption capacity (mol/kg) was calculated from the following Eq.:

$$\text{Adsorption capacity} = (C_0\text{-}C_e) \times V_0/m$$

The following solutions were used as the solutions containing metal ions.

Silver solution: A 0.1 mol/L nitric acid solution having a silver (I) concentration of 5 mmol/L, obtained by diluting a silver standard solution with a nitric acid solution, was used.

Gold solution: A 0.2 mol/L hydrochloric acid solution having a gold (III) concentration of 3 mmol/L, obtained by diluting a gold standard solution with a hydrochloric acid solution, was used.

Palladium solution: A 0.2 mol/L hydrochloric acid solution having a palladium (II) concentration of 2 mmol/L, obtained by diluting a palladium standard solution with a hydrochloric acid solution, was used.

Platinum solution: A 0.2 mol/L hydrochloric acid solution having a platinum (IV) concentration of 2 mmol/L, obtained by diluting a platinum standard solution with a hydrochloric acid solution, was used.

Standard solutions (1000 mg/L) of silver (Ag(I)), gold (Au(III)), palladium (Pd(II)), and platinum (Pt(IV)), manufactured by Kanto Chemical (Tokyo, Japan), were used. The results are shown in Table 2 below.

[Table 2]

Table 2

| Metal ion | Saturated adsorption amount (mol/Kg) | |
|---|---|---|
| | Adsorbent (1) | Adsorbent (2) |
| Pd ion | 2 | 1.3 |
| Pt ion | 1.4 | 1 |
| Ag ion | 3.8 | 1.2 |
| Au ion | 2.7 | 2.3 |

Evaluation of Saturated Adsorption Capacity for Toxic Metal

The saturated adsorption capacity of the adsorbents (1) to (3) obtained in the examples and the comparative examples for the toxic metals was evaluated by the following method (batch method).

10 mL of the solution containing toxic metal ions and 20 mg of the adsorbent classified into a particle size of 212-600 μm were added to a 100-mL centrifugation tube, and the content of the tube was stirred at 25°C and 200 rpm for 20 minutes.

The content of the tube was filtered through a membrane filter (nitrocellulose, pore size: 0.45 μm), and the concentration of the metal ions in the filtrate ($C_e$: mol/L) was quantified by inductively coupled plasma (ICP) atomic emission spectroscopy (iCAP6300, manufactured by Thermo Fischer Scientific, Waltham, Massachusetts). The initial concentration of metal ions in the solution was defined as $C_0$ (mol/L), the initial fluid volume of the solution containing metal ions was defined as Vo (L), the weight of the adsorbent used was defined as m (kg), and the adsorption capacity

(mol/kg) was calculated from the following Eq.:

$$\text{Adsorption capacity} = (C_0\text{-}C_e) \times V_0/m$$

The following solution was used for the solutions containing toxic metal ions.
A nitric acid solution having an arsenic (III) concentration of 1 mmol/L and a pH of 3, obtained by diluting an arsenic (III) standard solution with a nitric acid solution, was used. The result is shown in Table 3 below.

[Table 3]

Table 3

| | Adsorbent (1) | Adsorbent (2) | Adsorbent (3) |
|---|---|---|---|
| Saturated adsorption amount of metal ion (mol/Kg) | 0.73 | 0.35 | 0.6 |

Storage stability evaluation

The adsorbents (1) to (3) obtained in the examples and comparative examples, which had been stored in the air at 40°C for 2 weeks, were used as samples, and the adsorption capacity for arsenic was measured in the same manner as in "Evaluation of Saturated Adsorption Capacity for Toxic Metal", and this was defined as "arsenic adsorption capacity after storage".
Then, the retention rate (%) of metal recovery was calculated from the following Eq. to evaluate the storage stability. As the "arsenic adsorption capacity before storage", a value obtained in "Evaluation of Saturated Adsorption Capacity for Toxic Metal" was used. (Retention rate (%) of metal recovery) = (arsenic adsorption capacity after storage)/(arsenic adsorption capacity before storage) × 100
The results are shown in Table 4 below.

[Table 4]

[Table 4]

| | Adsorbent (1) | Adsorbent (2) | Adsorbent (3) |
|---|---|---|---|
| Retention rate of metal recovery (%) | 95 | 62 | 4.6 |

As described above, it is found that the metal adsorbent (or cellulose derivative) of the present disclosure has a structure in which a cyclic dithiocarbamate group is introduced into the cellulose, and thus has an excellent selective metal adsorption capability and an excellent storage stability.
Meanwhile, it is found that the cellulose derivative having a structure in which a chain dithiocarbamate group is introduced into the cellulose has a selective metal adsorption capability, but has low storage stability.
As a summary of the above, configurations and variations of the present disclosure are described below.

(1) A cellulose derivative including a repeating unit represented by Formula (I).
(2) The cellulose derivative according to (1), in which a total average degree of substitution of the group represented by Formula (a) is 0.1 to 3.0.
(3) The cellulose derivative according to (1) or (2), in which a recovery percentage of a metal ion (preferably a valuable metal ion, particularly preferably at least one metal ion selected from a vanadium ion, an iron ion, a cobalt ion, a nickel ion, a copper ion, a zinc ion, an arsenic ion, a cadmium ion, a lead ion, a bismuth ion, a rhodium ion, an iridium ion, a palladium ion, a platinum ion, a silver ion, and a gold ion) classified as a soft acid or an intermediate acid in the HSAB theory, as determined by the following method, is 85% or greater:
Metal ion recovery percentage measurement method, the method including:

immersing 5 mg of the cellulose derivative in a test solution (pH3) having a metal ion concentration of 10 μmol/L,

and stirring the mixture at 25°C and 200 rpm for 20 minutes; then measuring the metal ion concentration $C_e$ (mol/L) in the test solution; and calculating the recovery percentage of the metal ion from the following Eq.:

$$\text{Recovery percentage} = (C_0\text{-}C_e)/C_0 \times 100$$

where $C_0$ in the Eq. represents an initial concentration (mol/L) of metal ion in the test solution.

(4) The cellulose derivative according to any one of (1) to (3), in which a recovery percentage of a toxic metal ion (preferably, a metal ion selected from an arsenic ion, a cadmium ion, and a lead ion), as determined by the following method, is 85% or greater:
Metal ion recovery percentage measurement method, the method including:

immersing 5 mg of the cellulose derivative in a test solution (pH3) having a metal ion concentration of 10 μmol/L, and stirring the mixture at 25°C and 200 rpm for 20 minutes; then measuring the metal ion concentration $C_e$ (mol/L) in the test solution; and calculating the recovery percentage of the metal ion from the following Eq.:

$$\text{Recovery percentage} = (C_0\text{-}C_e)/C_0 \times 100$$

where $C_0$ in the Eq. represents an initial concentration (mol/L) of metal ion in the test solution.

(5) The cellulose derivative according to any one of (1) to (4), in which a recovery percentage of a metal ion (preferably, an alkali metal ion and an alkaline earth metal ion) classified as a hard acid in the HSAB theory, as determined by the following method, is 10% or less:
Metal ion recovery percentage measurement method, the method including:

immersing 5 mg of the cellulose derivative in a test solution (pH3) having a metal ion concentration of 10 μmol/L, and stirring the mixture at 25°C and 200 rpm for 20 minutes; then measuring the metal ion concentration $C_e$ (mol/L) in the test solution; and calculating the recovery percentage of the metal ion from the following Eq.:

$$\text{Recovery percentage} = (C_0\text{-}C_e)/C_0 \times 100$$

where $C_0$ in the Eq. represents an initial concentration (mol/L) of metal ion in the test solution.

(6) The cellulose derivative according to any one of (1) to (5), in which recovery percentages of a valuable metal ion and a toxic metal ion are 85% or greater, and recovery percentages of an alkali metal ion and an alkaline earth metal ion, as determined by the following method, are 10% or less:
Metal ion recovery percentage measurement method, the method including:

immersing 5 mg of the cellulose derivative in a test solution (pH3) having a metal ion concentration of 10 μmol/L, and stirring the mixture at 25°C and 200 rpm for 20 minutes; then measuring the metal ion concentration $C_e$ (mol/L) in the test solution; and calculating the recovery percentage of the metal ion from the following Eq.:

$$\text{Recovery percentage} = (C_0\text{-}C_e)/C_0 \times 100$$

where $C_0$ in the Eq. represents an initial concentration (mol/L) of metal ion in the test solution.

(7) The cellulose derivative according to any one of (1) to (6), in which an adsorption capacity for the valuable metal ion is 1 mol/kg or greater.
(8) The cellulose derivative according to any one of (1) to (7), in which an adsorption capacity for the toxic metal ion is 0.2 mol/kg or greater.
(9) The cellulose derivative according to any one of (1) to (8), in which an adsorption capacity for a base metal ion is 0.1 mol/kg or less.
(10) The cellulose derivative according to any one of (1) to (9), in which an adsorption capacity for the alkali metal ion is 0.1 mol/kg or less.

(11) The cellulose derivative according to any one of (1) to (10), in which an adsorption capacity for the alkaline earth metal ion is 0.1 mol/kg or less.
(12) A metal adsorbent including the cellulose derivative described in any one of (1) to (11).
(13) The metal adsorbent according to (12), in which the metal adsorbent is an adsorbent of a metal whose cation corresponds to a soft acid or an intermediate acid in the HSAB theory.
(14) The metal adsorbent according to (12) or (13), in which the metal adsorbent is an adsorbent of at least one metal selected from titanium, vanadium, manganese, iron, cobalt, nickel, copper, zinc, gallium, arsenic, cadmium, indium, lead, bismuth, ruthenium, rhodium, iridium, palladium, platinum, silver, and gold.
(15) Use of the cellulose derivative described in any one of (1) to (11) as a metal adsorbent.
(16) A method for recovering a metal, the method including allowing the cellulose derivative (I) described in any one of (1) to (11) to adsorb a metal dissolved in a solution to recover the metal.
(17) A method for producing a metal adsorbent, the method including producing a metal adsorbent using the cellulose derivative described in any one of (1) to (11).
(18) A method for producing a metal adsorbent, the method including: preparing the cellulose derivative described in any one of (1) to (11) through the following 1) to 3); and producing a metal adsorbent containing the cellulose derivative using the prepared cellulose derivative:

1) reacting cellulose with a compound represented by Formula (2) to produce a cellulose derivative (II) having a repeating unit represented by Formula (II);
2) deprotecting an imino group of the cellulose derivative (II) to produce a cellulose derivative (III) having a repeating unit represented by Formula (III); and
3) reacting the cellulose derivative (III), in the presence of a sulfur compound, with a quaternary ammonium compound represented by Formula (3).

(19) A cellulose derivative including a repeating unit represented by Formula (II).
(20) A cellulose derivative including a repeating unit represented by Formula (III).

Industrial Applicability

The cellulose derivative of the present disclosure can be preferably used as a valuable metal adsorbent or a toxic metal removal agent.

**Claims**

1. A cellulose derivative comprising a repeating unit represented by Formula (I):

[Chem. 1]

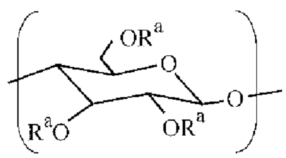

(I)

wherein $R^a$s are identical or different and are a hydrogen atom or a group represented by Formula (a), and at least one of all the $R^a$s included in the cellulose derivative is a group represented by Formula (a):

[Chem. 2]

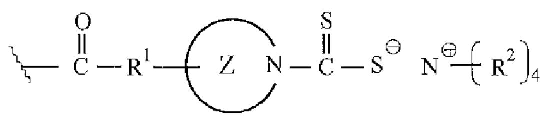

(a)

wherein ring Z represents a heterocycle containing a nitrogen atom as a heteroatom, $R^1$ represents a single

bond or an alkylene group having from 1 to 10 carbons, and four $R^2$s are identical or different, and each represent an alkyl group having from 1 to 10 carbons.

2. The cellulose derivative according to claim 1, wherein a total average degree of substitution of the group represented by Formula (a) is 0.1 to 3.0.

3. A metal adsorbent comprising the cellulose derivative described in claim 1 or 2.

4. The metal adsorbent according to claim 3, wherein the metal adsorbent is an adsorbent of a metal whose cation is classified as a soft acid or an intermediate acid in the HSAB theory.

5. The metal adsorbent according to claim 3 or 4, wherein the metal adsorbent is an adsorbent of at least one metal selected from titanium, vanadium, manganese, iron, cobalt, nickel, copper, zinc, gallium, arsenic, cadmium, indium, lead, bismuth, ruthenium, rhodium, iridium, palladium, platinum, silver, and gold.

6. A method for recovering a metal, the method comprising allowing the cellulose derivative described in claim 1 or 2 to adsorb a metal dissolved in a solution to recover the metal.

7. A method for producing a metal adsorbent,
the method comprising: preparing the cellulose derivative described in claim 1 or 2 through the following 1) to 3); and producing a metal adsorbent containing the cellulose derivative using the prepared cellulose derivative:

1) reacting cellulose with a compound represented by Formula (2) to produce a cellulose derivative (II) having a repeating unit represented by Formula (II):

[Chem. 3]

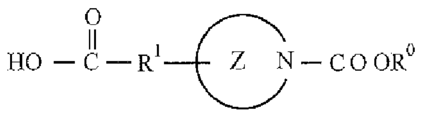

(2)

wherein ring Z represents a heterocycle containing a nitrogen atom as a heteroatom, and $R^1$ represents a single bond or an alkylene group having from 1 to 10 carbons, and $R^0$ represents a monovalent hydrocarbon group or a monovalent heterocyclic group,

[Chem. 4]

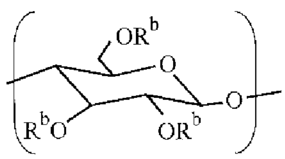

(II)

wherein $R^b$s are identical or different, and are a hydrogen atom or a group represented by Formula (b),

[Chem. 5]

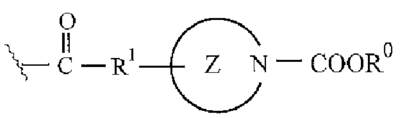

(b)

wherein ring Z, $R^1$, and $R^0$ are the same as described above, and at least one of all the $R^b$s included in the cellulose derivative is the group represented by Formula (b);

2) deprotecting an imino group of the cellulose derivative (II) to produce a cellulose derivative (III) having a repeating unit represented by Formula (III):

[Chem. 6]

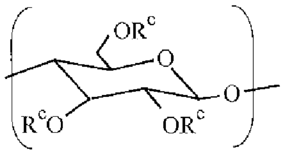

(III)

wherein $R^c$ are identical or different, and are a hydrogen atom or a group represented by Formula (c),

[Chem. 7]

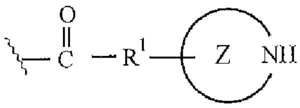

(c)

wherein ring Z, $R^1$ are the same as described above, at least one of all the $R^c$s included in the cellulose derivative is the group represented by Formula (c), and further the group represented by Formula (c) may form a salt; and

3) reacting the cellulose derivative (III), in the presence of a sulfur compound, with a quaternary ammonium compound represented by Formula (3):

$N^+(R^2)_4X^-$ (3),

wherein four $R^2$s are identical or different, and each represent an alkyl group having from 1 to 10 carbons, and $X^-$ represents a counter anion.

**8.** A cellulose derivative comprising a repeating unit represented by Formula (II):

[Chem. 8]

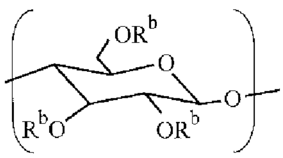

(II)

wherein $R^b$s are identical or different and are a hydrogen atom or a group represented by Formula (b), and at least one of all the $R^b$s included in the cellulose derivative is a group represented by Formula (b):

[Chem. 9]

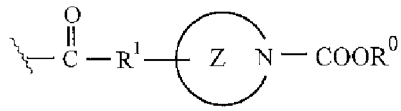

(b)

wherein ring Z represents a heterocycle containing a nitrogen atom as a heteroatom, $R^1$ represents a single bond or an alkylene group having from 1 to 10 carbons, and $R^0$ represents a monovalent hydrocarbon group or a monovalent heterocyclic group.

**9.** A cellulose derivative comprising a repeating unit represented by Formula (III):

[Chem. 10]

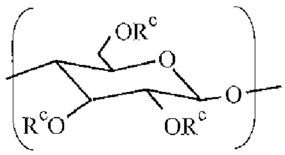

(III)

wherein $R^c$s are identical or different and are a hydrogen atom or a group represented by Formula (c), at least one of all the $R^c$s included in the cellulose derivative is a group represented by Formula (c), and further the group represented by Formula (c) may form a salt,

[Chem. 11]

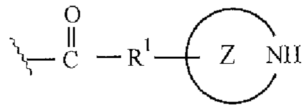

(c)

wherein ring Z represents a heterocycle containing a nitrogen atom as a heteroatom, and $R^1$ represents a single bond or an alkylene group having from 1 to 10 carbons.

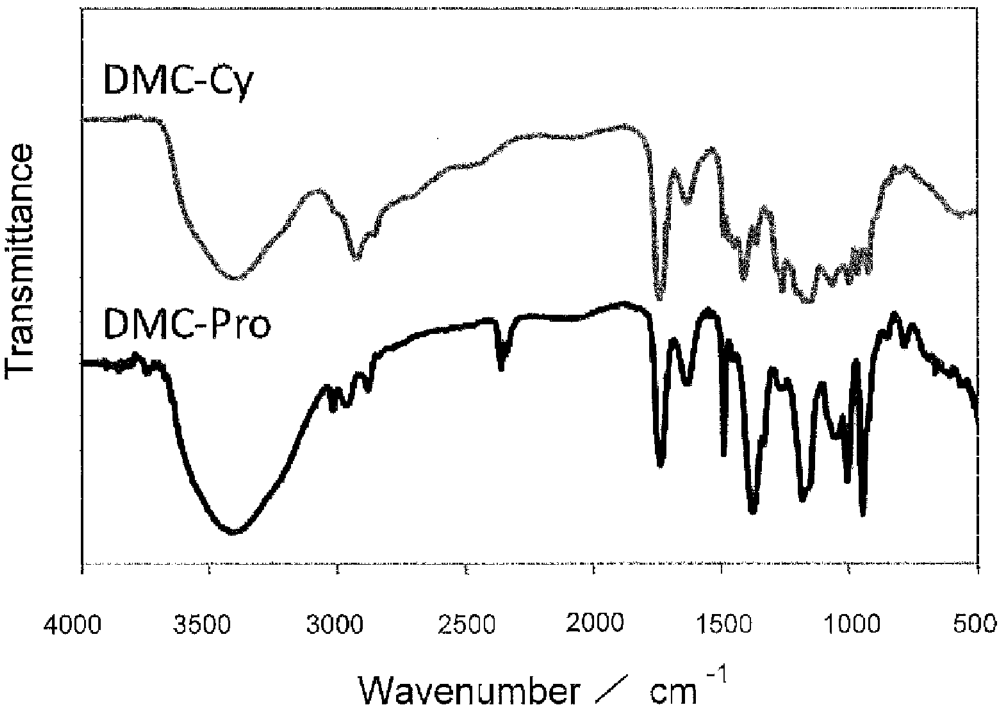
DMC-Cy
DMC-Pro
Transmittance
4000
3500
3000
2500
2000
1500
1000
500
Wavenumber ／ cm⁻¹

FIG. 1

# INTERNATIONAL SEARCH REPORT

International application No. PCT/JP2020/021903

A. CLASSIFICATION OF SUBJECT MATTER
Int.Cl. B01J20/24(2006.01)i, B01J20/30(2006.01)i, C02F1/28(2006.01)i, C08B3/14(2006.01)i
FI: C08B3/14, B01J20/24, B01J20/30, C02F1/28
According to International Patent Classification (IPC) or to both national classification and IPC

B. FIELDS SEARCHED
Minimum documentation searched (classification system followed by classification symbols)
Int.Cl. B01J20/24, B01J20/30, C02F1/28, C08B3/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JMEDPlus/JST7580(JDreamIII), CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A<br>X | Bioorganic & Medicinal Chemistry Letters, 2006, 16(6), 1651-1655, DOI 10.1016/j.bmcl.2005.12.008, particularly, p. 1652 | 1-8<br>9 |
| A<br>X | Carbohydrate Polymers, 2019, 209, 223-229, DOI 10.1016/j.carbpol.2019.01.036, particularly, p. 225 | 1-8<br>9 |
| A<br>X | CN 107501416 A (DONGHUA UNIVERSITY) 22 December 2017 (2017-12-22), particularly, page 7 | 1-8<br>9 |
| A<br>X | CN 103598187 A (NANJING NMG ADDS CO., LTD.) 26 February 2014 (2014-02-26), paragraph [0043] | 1-8<br>9 |

☒ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
17 August 2020

Date of mailing of the international search report
01 September 2020

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

International application No.
PCT/JP2020/021903

C (Continuation). DOCUMENTS CONSIDERED TO BE RELEVANT

| Category* | Citation of document, with indication, where appropriate, of the relevant passages | Relevant to claim No. |
|---|---|---|
| A<br>X | Cellulose, 2008, 15(3), 481-488, DOI 10.1007/s10570-008-9197-5, particularly, p. 482 | 1-8<br>9 |
| A | Fresenius' Journal of Analytical Chemistry, 1998, 361(3), 303-305, DOI 10.1007/s002160050888, particularly, p. 303 | 1-9 |
| A | Kobunshi Kagaku, 1972, 29(7), 500-504, DOI 10.1295/koron1944.29.500, particularly, p. 500 | 1-9 |
| A | WO 2020/027091 A1 (DAICEL CORPORATION) 06 February 2020 (2020-02-06), particularly, claims, examples | 1-9 |
| A | WO 2020/027009 A1 (DAICEL CORPORATION) 06 February 2020 (2020-02-06), particularly, claims, examples | 1-9 |
| A | JP 2018-83882 A (DAICEL CORPORATION) 31 May 2018 (2018-05-31), particularly, claims, examples | 1-9 |

Form PCT/ISA/210 (second sheet) (January 2015)

**INTERNATIONAL SEARCH REPORT**

International application No.
PCT/JP2020/021903

**Box No. II Observations where certain claims were found unsearchable (Continuation of item 2 of first sheet)**

This international search report has not been established in respect of certain claims under Article 17 (2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

Document 1: Bioorganic & Medicinal Chemistry Letters, 2006, 16(6), 1651-1655, DOI 10.1016/j.bmcl.2005.12.008, particularly, p. 1652, scheme 1

Document 2: Carbohydrate Polymers, 2019, 209, 223-229, DOI 10.1016/j.carbpol.2019.01.036, particularly, p. 225, scheme 1

Document 3 : CN 107501416 A (DONGHUA UNIVERSITY) 22 December 2017 (2017-12-22), particularly, page 7, fig. 1

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☒ No protest accompanied the payment of additional search fees.

Form PCT/ISA/210 (continuation of first sheet) (January 2015)

**INTERNATIONAL SEARCH REPORT**

International application No.
PCT/JP2020/021903

**Box No. III Observations where unity of invention is lacking (Continuation of item 3 of first sheet)**

This International Searching Authority found multiple inventions in this international application, as follows:

(Invention 1) Claims 1-8

Claims 1-8 have a special technical feature of a "cellulose derivative having a repeating unit represented by formula (I)", and thus are classified as invention 1.

(Invention 2) Claim 9

Claim 9 pertains to a "cellulose derivative having a repeating unit represented by (III)", and shares a common technical feature of a partial structure to the nitrogen atom of -C(=O)-R1-ring Z (heterocycle containing the nitrogen atom as a heteroatom) in formula (c) in formula (III) with formula (a) in formula (I) set forth in claim 1 classified as invention 1.

However, the technical feature is well known in light of the disclosures in documents 1-3 and the like and does not make a contribution over the prior art, and thus is not considered to be a special technical feature. Moreover, there is no other same or corresponding special technical feature among the inventions.

Further, claim 9 is not dependent on claim 1. Furthermore, claim 9 is not substantially the same as or similarly closely related to any of the claims classified as invention 1.

Therefore, claim 9 cannot be classified as invention 1.

Consequently, the claims are classified into the following two inventions.

(Invention 1) Claims 1-8

(Invention 2) Claim 9

Form PCT/ISA/210 (continuation of first sheet) (January 2015)

**INTERNATIONAL SEARCH REPORT**
Information on patent family members

International application No.
PCT/JP2020/021903

| | | |
|---|---|---|
| CN 107501416 A | 22 December 2017 | (Family: none) |
| CN 103598187 A | 26 February 2014 | (Family: none) |
| WO 2020/027091 A1 | 06 February 2020 | (Family: none) |
| WO 2020/027009 A1 | 06 February 2020 | (Family: none) |
| JP 2018-83882 A | 31 May 2018 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009247981 A